# EUROPEAN PATENT APPLICATION

(11) **EP 3 196 504 A1**
(43) Date of publication of application: **26.07.2017**
(21) Application number: 15842112.3
(22) Date of filing: 04.09.2015
(51) Int. Cl.: F16F 9/32

(54) **SHOCK ABSORBER**

(30) Priority: 16.09.2014 JP 2014187263
(71) Applicant: KYB Corporation, Tokyo 105-6111 (JP)
(72) Inventor: CHIKAMATSU, Satoshi, Tokyo 105-6111 (JP); HIROSE, Mitsuhiko, Tokyo 105-6111 (JP)
(74) Representative: Grünecker Patent- und Rechtsanwälte PartG mbB
(86) International application number: PCT/JP2015/075225
(87) International publication number: WO 2016/043068

(57) **Abstract**

In a shock absorber 100, 200, an outer case 2 made of resin is disposed so as to cover an inner case 1 made of metal, and the outer case 2 forms a reservoir chamber 130 for storing the hydraulic fluid between the outer case 2 and the inner case 1. The outer case 2 is supported by the inner case 1 via protrusions 20, which are formed on either one of the outer peripheral surface of the inner case 1 and the inner peripheral surface of the outer case 2 so as to protrude toward and abut the other one of the outer peripheral surface of the inner case 1 and the inner peripheral surface of the outer case 2.

## Description

### TECHNICAL FIELD

The present invention relates to a shock absorber.

### BACKGROUND ART

JP2013-181582A discloses a shock absorber used in a strut-type suspension, wherein an outer tube is made of resin in order to reduce the weight. In this shock absorber, a plurality of ribs are provided on the outside of the outer tube in order to improve the strength and rigidity.

### SUMMARY OF INVENTION

However, since the ribs which are provided in order to improve the strength and rigidity are provided on the outside of the outer tube, the outer tube is increased in size, and this may cause interference with other parts. In addition, the weight of the outer tube increases due to the plurality of ribs, and thus the effect of reducing the weight of the shock absorber achieved by making the outer tube out of resin also decreases.

An object of the present invention is to improve the strength and rigidity of the outer tube in a shock absorber without increasing the size of the outer tube even if the outer tube is made of resin.

According to one aspect of the present invention, a shock absorber includes: an inner case made of metal filled with hydraulic fluid; an outer case made of resin disposed so as to cover the inner case, the outer case forming a reservoir chamber for storing the hydraulic fluid between the outer case and the inner case; and protrusions formed on either one of the outer peripheral surface of the inner case and the inner peripheral surface of the outer case so as to protrude toward and abut the other one of the outer peripheral surface of the inner case and the inner peripheral surface of the outer case.

### BRIEF DESCRIPTION OF DRAWINGS

FIG. 1 is a cross-section view of a shock absorber according to a first embodiment of the present invention;
FIG. 2 is a cross-section view along line II-II in FIG. 1; and
FIG. 3 is a cross-section view of a shock absorber according to a second embodiment of the present invention.

### DESCRIPTION OF EMBODIMENTS

Embodiments of the present invention will now be explained below while referring to the attached drawings.

### <First Embodiment>

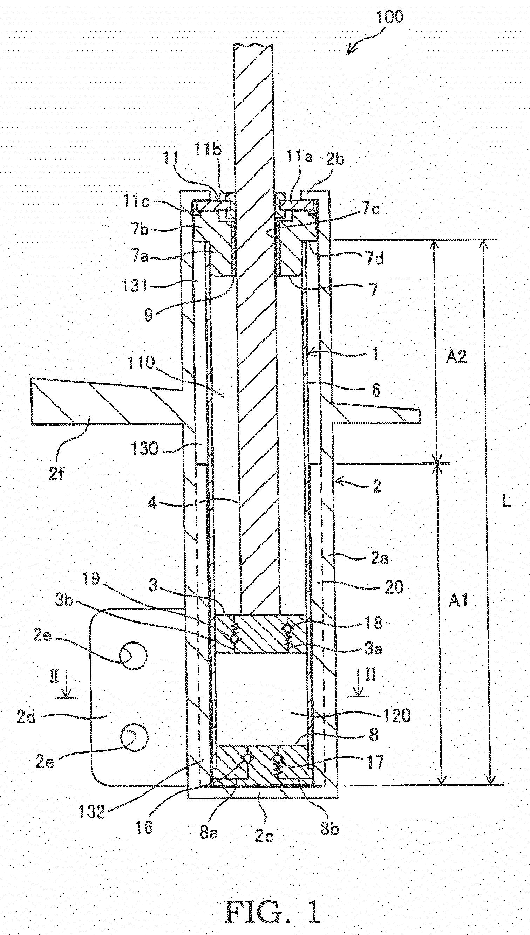

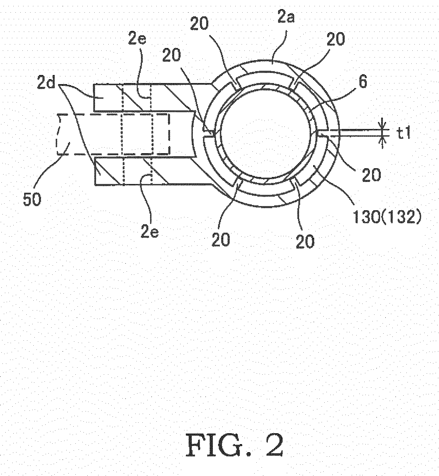

A shock absorber 100 according to a first embodiment of the present invention will now be explained referring to FIGS. 1 and 2. The shock absorber 100 shown in FIG. 1 is a twin-tube type shock absorber used in a strut-type suspension of a vehicle such as an automobile.

As shown in FIGS. 1 and 2, the shock absorber 100 includes the following: an inner case 1 made of metal that is filled with hydraulic oil which serves as a hydraulic fluid; an outer case 2 made of resin that is disposed so as to cover the inner case 1, wherein a reservoir chamber 130 that stores the hydraulic oil is formed between the outer case 2 and the inner case 1; protrusions 20 that protrude from an inner peripheral surface of the outer case 2 toward an outer peripheral surface of the inner case 1 so as to abut the outer peripheral surface of the inner case 1; a piston 3 that is slidably inserted into the inner case 1 and partitions the inside of the inner case 1 into an extension-side chamber 110 and a contraction-side chamber 120; and a piston rod 4 that is inserted into the inner case 1 such that it can move into and out of the inner case 1 and that is connected at one end to the piston 3. The shock absorber 100 is connected at the other end of the piston rod 4 to a vehicle body via an upper mount (not illustrated), and is joined to a support member 50 such as a knuckle that supports a vehicle wheel via brackets 2d formed on the outer case 2.

The inner case 1 includes the following: a cylindrical inner tube 6; a rod guide 7 that is fitted into an end of the inner tube 6 on the extension-side chamber 110 side, and slidably supports the piston rod 4; and a base valve 8 that is fitted into an end of the inner tube 6 on the contraction-side chamber 120 side. These members that constitute the inner case 1 are formed from a steel material or aluminum alloy.

The rod guide 7 includes the following: a small-diameter part 7a that is fitted into the inner tube 6; a large-diameter part 7b that has a larger diameter than that of the small-diameter part 7a; a stepped part 7d that is provided between the small-diameter part 7a and the large-diameter part 7b; and a rod insertion hole 7c that is formed to penetrate in the axial direction and into which the piston rod 4 is inserted. A bush 9 is inserted into the rod insertion hole 7c. The piston rod 4 that is inserted into the rod insertion hole 7c is slidably supported by the rod guide 7 via the bush 9.

The base valve 8 includes passages 8a and 8b which establish communication between the contraction-side chamber 120 and the reservoir chamber 130. A check valve 16, which opens during extension of the shock absorber 100 to open the passage 8a, is provided in the passage 8a. A damping valve 17, which opens during contraction of the shock absorber 100 to open the passage 8b and applies resistance against the flow of hydraulic oil moving from the contraction-side chamber 120 to the reservoir chamber 130 through the passage 8b, is provided in the passage 8b.

The piston 3 that is slidably inserted into the inner case 1 includes passages 3a and 3b which establish communication between the extension-side chamber 110 and the contraction-side chamber 120. A damping valve 18, which opens during extension of the shock absorber 100 to open the passage 3a and applies resistance against the flow of hydraulic oil moving from the extension-side chamber 110 to the contraction-side chamber 120 through the passage 3a, is provided in the passage 3a. A check valve 19, which opens during contraction of the shock absorber 100 to open the passage 3b, is provided in the passage 3b.

As shown in FIGS. 1 and 2, the outer case 2 is a member made of synthetic resin in which the following are integrally formed by injection molding: an outer tube 2a that is formed coaxially with the inner tube 6; a caulking part 2b that is bent inwardly in the radial direction on the end of the outer tube 2a on the extension-side chamber 110 side; a closing part 2c that closes the end of the outer tube 2a on the contraction-side chamber 120 side; a pair of brackets 2d that extend opposing each other along the axial direction from the outer periphery of the outer tube 2a; and a suspension spring receiving part 2f that is formed in an approximately annular shape on the outer periphery of the outer tube 2a. As the synthetic resin, a synthetic resin comprising carbon fibers in order to improve the strength and rigidity is preferably used. The closing part 2c may be formed separate from the outer tube 2a, and the outer case 2 may be formed by welding to the end of the outer tube 2a.

As shown in FIG. 2, the support member 50 such as a knuckle that supports the vehicle wheel is inserted between the pair of brackets 2d and is joined by bolts (not illustrated) that are inserted into bolt holes 2e formed in the brackets 2d. In this way, the shock absorber 100 is connected to the vehicle wheel side via the brackets 2d that extend toward the side of the outer case 2. Therefore, a load that is input from the vehicle wheel side acts not only in the axial direction but also the radial direction of the shock absorber 100.

The suspension spring receiving part 2f, which is formed on the outer periphery of the outer case 2 similar to the brackets 2d, supports one end of a suspension spring (not illustrated).

An oil seal 11 is provided between the outer case 2 and the rod guide 7 of the inner case 1. The oil seal 11 includes the following: an annular seal main body 11a; an inner periphery seal part 11b that is attached to the inner periphery side of the seal main body 11a and slidingly contacts the outer periphery of the piston rod 4; and an outer periphery seal 11c that is attached to the outer periphery side of the seal main body 11a and contacts the inner periphery of the outer case 2 and the top surface of the rod guide 7. The oil seal 11 is accommodated within the outer case 2 together with the inner case 1, and in this state, the oil seal 11 is fixed within the outer case 2 due to the caulking part 2b of the outer case 2 being bent inwardly in the radial direction. In detail, the seal main body 11a is sandwiched between the caulking part 2b of the outer case 2 and the large-diameter part 7b of the rod guide 7, and thereby the oil seal 11 is retained. Hydraulic oil is prevented from leaking to the outside from between the piston rod 4 and the inner case 1 by the inner periphery seal part 11b, and hydraulic oil is prevented from leaking to the outside from between the inner case 1 and the outer case 2 by the outer periphery seal 11c.

As shown in FIG. 2, the protrusions 20 are thin plate-shaped resin members that are formed integrally with the outer case 2 by injection molding, and the protrusions 20 protrude in the radial direction from the inner peripheral surface of the outer tube 2a toward the inner tube 6. A plurality of the protrusions 20 are provided spaced apart by intervals in the circumferential direction along the inner peripheral surface of the outer tube 2a, and the distal ends of the protrusions 20 contact the outer peripheral surface of the inner tube 6. Therefore, even if a load from the vehicle wheel side acts in the radial direction of the outer case 2 via the brackets 2d, the outer case 2 is supported by the inner case 1 via the plurality of protrusions 20. In this way, the outer case 2 and the inner case 1 take on a shape closely resembling a rigid body, and thus the rigidity and strength of the outer case 2 are improved.

As shown in FIG. 1, the protrusions 20 are provided in an installation region A1 that is set across a predetermined range in the axial direction of the reservoir chamber 130. A length L in FIG. 1 is a full length L in the axial direction of the reservoir chamber 130. In this first embodiment, the length L corresponds to the axial direction length from the inside surface of the closing part 2c of the outer case 2 to the stepped part 7d of the rod guide 7. The installation region A1 is set within a range of the full length L in the axial direction of the reservoir chamber 130.

The installation region A1 of the protrusions 20 shown in FIG. 1 is provided on the closing end 2c side of the outer case 2. A non-installation region A2, in which the protrusions 20 are not provided, is provided adjacent to the installation region A1 in the axial direction. In other words, the reservoir chamber 130 is divided in the axial direction into the installation region A1 and the non-installation region A2, and the axial direction length of the protrusions 20 is set so as to be shorter than the full length L in the axial direction of the reservoir chamber 130.

Next, the reason for providing the non-installation region A2 adjacent to the installation region A1 will be explained.

Normally, a pressurized gas such as nitrogen or air is sealed together with the hydraulic oil in the reservoir chamber 130, and the reservoir chamber 130 includes an air chamber 131 that is filled with the pressurized gas, and a liquid chamber 132 in which the hydraulic oil is stored. The shock absorber 100 is arranged such that the closing part 2c side of the outer case 2 is positioned on the bottom in the vertical direction, and thus the liquid chamber 132 is positioned on the closing part 2c side and the air chamber 131 is positioned above the liquid chamber 132.

When the piston rod 4 moves into the inner case 1 and the shock absorber 100 enters a contracted state, the pressurized gas within the air chamber 131 is compressed to a high pressure by the hydraulic oil that moves from within the inner case 1 to the reservoir chamber 130. The pressurized gas which has become high pressure pressurizes the hydraulic oil within the liquid chamber 132, and the hydraulic oil within the liquid chamber 132 is urged to move into the inner case 1 when the shock absorber 100 is in an extended state.

Therefore, if the volume of the air chamber 131 that is filled with the pressurized gas decreases, the compression ratio of the pressurized gas that is compressed by the hydraulic oil increases, and the pressure of the pressurized gas that has been compressed reaches a set value or greater. The pressurized gas which has a pressure of the set value or greater excessively pressurizes the hydraulic oil of the liquid chamber 132. If the pressure of the hydraulic oil rises excessively, the hydraulic oil may leak from the seal part or the like, and this causes a decrease in the shock absorbing performance of the shock absorber.

Therein, if the above-described protrusions 20 are provided over the entire axial direction of the reservoir chamber 130, the protrusions 20 cause the volume of the air chamber 131 to decrease. In other words, if the installation region A1 is set over a range reaching the air chamber 131, the compression ratio of the pressurized gas increases, and hydraulic oil leaks, etc. may occur.

In order to avoid the above-described phenomenon, the outer diameter of the outer case 2 could be increased and the volume of the air chamber 131 could be increased, but increasing the size of the outer case 2 causes weight increases and interference with other parts.

Therefore, in the first embodiment, in order to suppress any decreases in the volume of the air chamber 131, the non-installation region A2 is provided on the air chamber 131 side of the reservoir chamber 130. The ratio of the installation region A1 and the non-installation region A2 is set in consideration of improving the strength and rigidity of the outer case 2 and securing the volume of the air chamber 131, and is preferably set to from 1:1 to 3:1. In the installation region A1, the protrusions 20 may be provided intermittently in the axial direction. By providing the protrusions 20 intermittently in the axial direction instead of continuously, increases in the weight due to providing the protrusions 20 can be suppressed.

If there would be no effect on the compression ratio of the pressurized gas by providing the protrusions 20, the non-installation region A2 does not have to be provided and the protrusions 20 may be provided across the full length L in the axial direction of the reservoir chamber 130. In this case, the rigidity and strength of the outer case 2 are further improved. Further, in this case as well, the protrusions 20 may be provided intermittently in the axial direction. By providing the protrusions 20 intermittently in the axial direction instead of continuously, increases in the weight due to providing the protrusions 20 can be suppressed and the rigidity and strength of the outer case 2 can be improved.

As shown in FIG. 2, the protrusions 20 are provided at six places spaced apart by intervals in the circumferential direction. The number of protrusions 20 is not limited to six, and any number of protrusions 20 may be provided. However, although the strength and rigidity of the outer case 2 is improved as the number of protrusions 20 increases, the volume of the reservoir chamber 130 decreases as the number of protrusions 20 increases, and thus the amount of hydraulic oil which can be stored therein decreases. In order to increase the volume of the reservoir chamber 130, the outer diameter of the outer case 2 could be increased, but increasing the size of the outer case 2 causes weight increases and interference with other parts. Therefore, the number of protrusions 20 is set in consideration of securing the volume of the reservoir chamber 130 as well as the strength and rigidity of the outer case 2, and is preferably set to from six to ten.

For similar reasons, a thickness t1 of the protrusions 20 illustrated in FIG. 2 is also set in consideration of securing the volume of the reservoir chamber 130 as well as the strength and rigidity of the outer case 2. The strength and rigidity of the outer case 2 is improved as the thickness t1 of the protrusions 20 increases, but the volume of the reservoir chamber 130 decreases as the thickness t1 of the protrusions 20 increases, and thus the amount of hydraulic oil which can be stored therein decreases. In the case that the protrusions 20 are formed integrally by injection molding together with the outer case 2, the moldability is also considered, and thus the thickness t1 is preferably set to 2 mm or more to 4 mm or less. Since the protrusions 20 are provided spaced apart by intervals in the circumferential direction on the inner peripheral surface of the outer tube 2a, communication between the passages 8a and 8b provided in the base valve 8 and the reservoir chamber 130 is not inhibited.

The protrusions 20 may be formed integrally with the outer case 2 as described above, or the protrusions 20 may be formed integrally with the inner case 1. In the case that the protrusions 20 are formed integrally with the inner case 1, the protrusions 20 are formed from the same metallic material as the inner case 1, and protrude from the outer peripheral surface of the inner case 1 toward the inner peripheral surface of the outer case 2 so as to abut the inner peripheral surface of the outer case 2. Further, the protrusions 20 may be formed separately from the inner case 1 and the outer case 2. In this case, after the protrusions 20 are formed from a synthetic resin, an aluminum alloy, a steel material, or the like, they are bonded to the outer peripheral surface of the inner case 1 or the inner peripheral surface of the outer case 2.

Next, the operation of the shock absorber 100 will be explained.

During extension of the shock absorber 100 in which the piston rod 4 moves out of the inner case 1, hydraulic oil moves via the passage 3a from the extension-side chamber 110, in which the volume is reduced due to the movement of the piston 3, to the contraction-side chamber 120, in which the volume is expanded. Further, hydraulic oil in an amount equivalent to the volume of the piston rod 4 that has moved out of the inner case 1 is supplied from the reservoir chamber 130 through the passage 8a to the contraction-side chamber 120.

At this time, resistance is applied by the damping valve 18 against the flow of hydraulic oil passing through the passage 3a, and thus a damping force is generated.

During contraction of the shock absorber 100 in which the piston rod 4 moves into the inner case 1, hydraulic oil moves via the passage 3b from the contraction-side chamber 120, in which the volume is reduced due to the movement of the piston 3, to the extension-side chamber 110, in which the volume is expanded. Further, hydraulic oil in an amount equivalent to the volume of the piston rod 4 that has moved into the inner case 1 is discharged from the contraction-side chamber 120 through the passage 8b to the reservoir chamber 130.

At this time, resistance is applied by the damping valve 17 against the flow of hydraulic oil passing through the passage 8b, and thus a damping force is generated.

As described above, in the shock absorber 100, hydraulic oil is supplied from the reservoir chamber 130 to the contraction-side chamber 120 during extension, and hydraulic oil is discharged from the contraction-side chamber 120 to the reservoir chamber 130 during contraction. Thereby, volume changes caused by the piston rod 4 moving into/out of the inner case 1 are compensated.

According to the first embodiment described above, the following effects are achieved.

The outer case 2 made of resin, into which an external force is input, is supported by the inner case 1 made of metal via the protrusions 20, and the outer case 2 and the inner case 1 take on a shape closely resembling a rigid body. Therefore, even in the case that the outer case 2 of the shock absorber 100 is made of resin, the rigidity and strength of the outer case 2 can be improved without increasing the size of the outer case 2.

### <Second Embodiment>

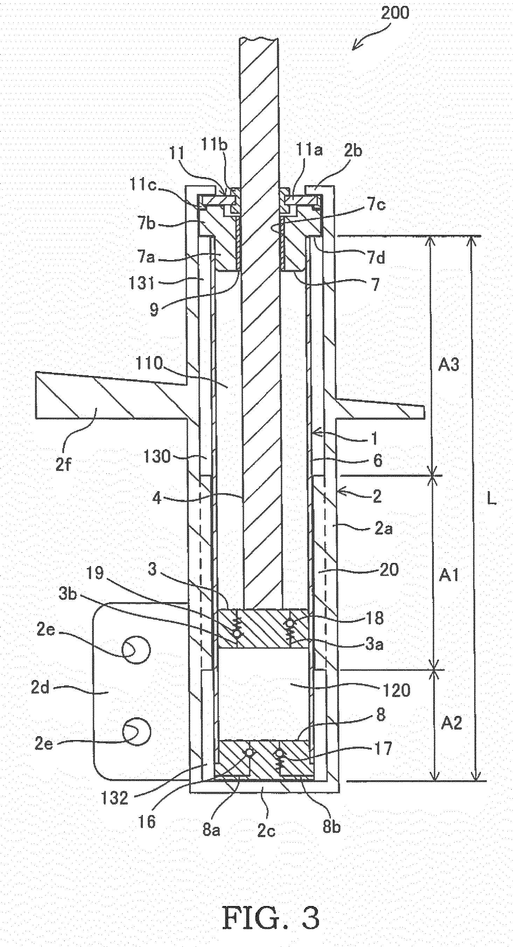

Next, a shock absorber 200 according to a second embodiment of the present invention will now be explained referring to FIG. 3. The following explanation will focus on the points of difference from the shock absorber 100 according to the first embodiment, and those constitutions which are the same as the first embodiment will be assigned the same reference numeral and explanations thereof will be omitted.

The shock absorber 200 differs from the first embodiment in that the non-installation region A2 is provided on the closing part 2c side of the outer case 2. Specifically, as shown in FIG. 3, the non-installation region A2 is provided on the closing part 2c side of the outer case 2, and the installation region A1 is provided adjacent in the axial direction to the non-installation region A2.

Next, the reason for providing the non-installation region A2 on the closing part 2c side of the outer case 2 will be explained.

When the piston rod 4 moves into the inner case 1 and the shock absorber 200 enters a contracted state, hydraulic oil within the inner case 1 moves to the reservoir chamber 130. On the other hand, when the piston rod 4 moves out of the inner case 1 and the shock absorber 200 enters an extended state, hydraulic oil within the reservoir chamber 130 moves to the inner case 1. These movements of the hydraulic oil take place via the passages 8a and 8b formed in the base valve 8.

In this way, movement of the hydraulic oil frequently takes place in the reservoir chamber 130 near the base valve 8. Thus, if the flow path resistance within the reservoir chamber 130 is large near the base valve 8, the movement of hydraulic oil becomes slow, and if the volume of the reservoir chamber 130 is reduced near the base valve 8, the amount of hydraulic oil that can move decreases. These phenomena lead to decreases in the shock absorbing performance of the shock absorber.

Therein, by providing the protrusions 20 within the reservoir chamber 130 near the base valve 8, the protrusions 20 cause the volume of the reservoir chamber 130 to decrease and apply resistance to the hydraulic oil flowing into and out of the reservoir chamber 130. In other words, if the installation region A1 is provided on the closing part 2c side of the outer case 2, the movement of hydraulic oil may become sluggish and the shock absorbing performance of the shock absorber 200 may decrease.

In order to avoid the above-described phenomena, the outer diameter of the outer case 2 could be increased, the volume of the reservoir chamber 130 could be increased, the storage amount of hydraulic oil near the base valve 8 could be secured, and the flow path resistance could be decreased, but increasing the size of the outer case 2 causes weight increases and interference with other parts.

Therefore, in the second embodiment, the non-installation region A2, in which the protrusions 20 are not provided, is provided within the reservoir chamber 130 near the base valve 8. In the installation region A1, the protrusions 20 may be provided intermittently in the axial direction. By providing the protrusions 20 intermittently in the axial direction instead of continuously, increases in the weight due to providing the protrusions 20 can be suppressed.

Further, in the second embodiment, in addition to the non-installation region A2, a separate non-installation region A3 is provided on the opposite side of the installation region A1. This separate non-installation region A3 is provided on the air chamber 131 side in order to suppress decreases in the volume of the air chamber 131. Therefore, in the second embodiment, the volume of the air chamber 131 can be secured and increases in the compression ratio of the pressurized gas can be suppressed similar to the first embodiment described above. In this case, the non-installation region A2 corresponds to a first non-installation region, and the non-installation region A3 corresponds to a second non-installation region.

The ratio of the installation region A1, the non-installation region A2, and the separate non-installation region A3 is set in consideration of improving the strength and rigidity of the outer case 2, the shock absorbing performance of the shock absorber 200, securing the volume of the air chamber 131, etc. In this way, in the second embodiment as well, the axial direction length over which the protrusions 20 are provided is set to be shorter than the full length L in the axial direction of the reservoir chamber 130 similar to the first embodiment described above.

If there would be no effect on the compression ratio of the pressurized gas or the flow of hydraulic oil by providing the protrusions 20, the non-installation regions A2 and A3 do not have to be provided and the protrusions 20 may be provided across the full length L in the axial direction of the reservoir chamber 130. In this case, the rigidity and strength of the outer case 2 are further improved. Further, in this case as well, the protrusions 20 may be provided intermittently in the axial direction. By providing the protrusions 20 intermittently in the axial direction instead of continuously, increases in the weight due to providing the protrusions 20 can be suppressed and the rigidity and strength of the outer case 2 can be improved.

According to the second embodiment described above, the following effects are achieved.

The outer case 2 made of resin, into which an external force is input, is supported by the inner case 1 made of metal via the protrusions 20, and the outer case 2 and the inner case 1 take on a shape closely resembling a rigid body. Therefore, even in the case that the outer case 2 of the shock absorber 200 is made of resin, the rigidity and strength of the outer case 2 can be improved without increasing the size of the outer case 2.

The constitutions, operations, and effects of the embodiments of the present invention will now be summarized below.

The shock absorber 100, 200 includes the following: the inner case 1 made of metal that is filled with hydraulic fluid; the outer case 2 made of resin that is disposed so as to cover the inner case 1, wherein the reservoir chamber 130 that stores the hydraulic fluid is formed between the outer case 2 and the inner case 1; and the protrusions 20 formed on either one of the outer peripheral surface of the inner case 1 and the inner peripheral surface of the outer case 2 so as to protrude toward and abut the other one of the outer peripheral surface of the inner case 1 and the inner peripheral surface of the outer case 2.

In this constitution, the outer case 2 made of resin, into which an external force is input, and the inner case 1 made of metal contact each other via the protrusions 20, and take on a shape closely resembling a rigid body. Therefore, even if a load from the vehicle wheel side via the brackets 2d acts in the radial direction of the outer case 2, the outer case 2 is supported by the inner case 1. In this way, compared to a case in which ribs are provided on the outside of the outer case 2, the rigidity and strength of the outer case 2 can be improved without increasing the size of the outer case 2 and while keeping the increase in weight to a minimum.

The air chamber 131 filled with gas is formed within the reservoir chamber 130, and the outer case 2 has a bottomed cylindrical shape in which one end is closed by the closing part 2c. The reservoir chamber 130 includes the installation region A1 in which the protrusions 20 are provided, and the non-installation region A2 in which the protrusions 20 are not provided and which is adjacent in the axial direction to the installation region A1. The installation region A1 is provided on the closing part 2c side, and the non-installation region A2 is provided on the air chamber 131 side.

In this constitution, the installation region A1 is provided on the closing part 2c side, and the non-installation region A2 is provided on the air chamber 131 side of the reservoir chamber 130. Therefore, the rigidity and strength of the outer case 2 can be improved by the protrusions 20 provided in the installation region A1 without increasing the size of the outer case 2. Further, since the protrusions 20 are not provided on the air chamber 131 side, decreases in the volume of the air chamber 131 are suppressed. Thus, excessive increases in the compression ratio of the pressurized gas can be prevented. In addition, since the protrusions 20 are only provided in a portion of the axial direction of the reservoir chamber 130, increases in the weight due to providing the protrusions 20 can be kept to a minimum compared to a case in which the protrusions 20 are provided over the full length in the axial direction of the reservoir chamber 130.

The air chamber 131 that is filled with gas is formed within the reservoir chamber 130, and the outer case 2 has a bottomed cylindrical shape in which one end is closed by the closing part 2c. The reservoir chamber 130 includes the installation region A1 in which the protrusions 20 are provided, and the non-installation region A2 in which the protrusions 20 are not provided and which is adjacent in the axial direction to the installation region A1. The installation region A1 is provided on the air chamber 131 side, and the non-installation region A2 is provided on the closing part 2c side.

In this constitution, the installation region A1 is provided on the air chamber 131 side in the reservoir chamber 130, and the non-installation region A2 is provided near the base valve 8 in the reservoir chamber 130. Therefore, the rigidity and strength of the outer case 2 can be improved by the protrusions 20 provided in the installation region A1 without increasing the size of the outer case 2. Further, since the protrusions 20 are not provided in the reservoir chamber 130 near the base valve 8, the flow of hydraulic oil moving between the reservoir chamber 130 and the inside of the inner case 1 is not inhibited. Thus, decreases in the shock absorbing performance of the shock absorber 200 can be prevented. In addition, since the protrusions 20 are only provided in a portion of the axial direction of the reservoir chamber 130, increases in the weight due to providing the protrusions 20 can be kept to a minimum compared to a case in which the protrusions 20 are provided over the full length in the axial direction of the reservoir chamber 130.

The air chamber 131 filled with gas is formed within the reservoir chamber 130, and the outer case 2 has a bottomed cylindrical shape in which one end is closed by the closing part 2c. The reservoir chamber 130 includes the installation region A1 in which the protrusions 20 are provided, and the first and second non-installation regions A2 and A3 in which the protrusions 20 are not provided and which are adjacent in the axial direction to the installation region A1. The first non-installation region A2 is provided on the closing part 2c side, and the second non-installation region A3 is provided on the air chamber 131 side.

In this constitution, the first non-installation region A2 is provided near the base valve 8 in the reservoir chamber 130, the second non-installation region A3 is provided on the air chamber 131 side in the reservoir chamber 130, and the installation region A1 is provided between the first non-installation region A2 and the second non-installation region A3. Therefore, the rigidity and strength of the outer case 2 can be improved by the protrusions 20 provided in the installation region A1 without increasing the size of the outer case 2. Further, since the protrusions 20 are not provided on the air chamber 131 side, decreases in the volume of the air chamber 131 are suppressed. Thus, excessive increases in the compression ratio of the pressurized gas can be prevented. In addition, since the protrusions 20 are not provided in the reservoir chamber 130 near the base valve 8, the flow of hydraulic oil moving between the reservoir chamber 130 and the inside of the inner case 1 is not inhibited. Therefore, decreases in the shock absorbing performance of the shock absorber 200 can be prevented. Moreover, since the protrusions 20 are only provided in a portion of the axial direction of the reservoir chamber 130, increases in the weight due to providing the protrusions 20 can be kept to a minimum compared to a case in which the protrusions 20 are provided over the full length in the axial direction of the reservoir chamber 130.

The protrusions 20 are provided intermittently in the axial direction.

In this constitution, the protrusions 20 are provided intermittently in the axial direction. Therefore, compared to a case in which the protrusions 20 are provided continuously in the axial direction, increases in the weight due to providing the protrusions 20 can be suppressed and the rigidity and strength of the outer case 2 can be improved.

In the installation region A1, the protrusions 20 are provided intermittently in the axial direction.

In this constitution, in the installation region A1, the protrusions 20 are provided intermittently in the axial direction. Therefore, compared to a case in which the protrusions 20 are provided continuously in the axial direction within the installation region A1, increases in the weight due to providing the protrusions 20 can be suppressed.

The axial direction length in which the protrusions 20 are provided is set to be shorter than the axial direction length of the reservoir chamber 130.

In this constitution, the axial direction length in which the protrusions 20 are provided is set to be shorter than the axial direction length of the reservoir chamber 130. Therefore, compared to a case in which the protrusions 20 are provided over the full length of the reservoir chamber 130, increases in the weight due to providing the protrusions 20 can be suppressed and the rigidity and strength of the outer case 2 can be improved.

The protrusions 20 are members made of resin that are formed integrally with the outer case 2.

In this constitution, the protrusions 20 are formed from resin integrally with the outer case 2. Therefore, it is not necessary to manufacture the protrusions 20 independently, and the protrusions 20 can be easily manufactured by injection molding, etc. together with the outer case 2. Further, the protrusions 20 do not need to be bonded to the inner case 1 or the outer case 2, and thus the shock absorber 100, 200 can be easily assembled. In addition, since the protrusions 20 are formed by resin instead of metal, increases in the weight due to providing the protrusions 20 can be suppressed.

A plurality of the protrusions 20 are provided spaced apart by intervals in the circumferential direction.

In this constitution, the inner case 1 and the outer case 2 contact each other via a plurality of the protrusions 20. Therefore, the outer case 2 and the inner case 1 take on a shape closely resembling a rigid body, and as a result, the rigidity and strength of the outer case 2 can be improved.

Embodiments of the present invention were described above, but the above embodiments are merely examples of applications of the present invention, and the technical scope of the present invention is not limited to the specific constitutions of the above embodiments.

For example, in the above-described embodiments, the shock absorber 100, 200 is used in a vehicle such as an automobile, but the shock absorber may also be used in other vehicles such as a train as well as in a building.

Further, in the above-described embodiments, hydraulic oil is used as the hydraulic fluid, but other liquids such as water may also be used.

In addition, in the above-described embodiments, when accommodating the inner case 1 or the oil seal 11 in the outer case 2, the caulking part 2b is bent radially inward so as to restrict axial direction movement of the inner case 1 or the oil seal 11 by the caulking part 2b. Instead of the caulking part 2b, axial direction movement of the inner case 1 or the oil seal 11 may be restricted using a cap member joined to the end of the outer case 2. Further, a cap made of resin may be welded to the end of the outer case 2, and axial direction movement of the inner case 1 may be restricted by this resin cap.

This application claims priority based on Japanese Patent Application No. 2014-187263 filed with the Japan Patent Office on September 16, 2014, the entire contents of which are incorporated into this specification.

## Claims

1. A shock absorber comprising:
an inner case made of metal filled with hydraulic fluid;
an outer case made of resin disposed so as to cover the inner case, the outer case forming a reservoir chamber for storing the hydraulic fluid between the outer case and the inner case; and
protrusions formed on either one of the outer peripheral surface of the inner case and the inner peripheral surface of the outer case so as to protrude toward and abut the other one of the outer peripheral surface of the inner case and the inner peripheral surface of the outer case.

2. The shock absorber according to claim 1, wherein an air chamber filled with gas is formed within the reservoir chamber,
wherein the outer case has a bottomed cylindrical shape in which one end is closed by a closing part,
wherein the reservoir chamber comprises:
an installation region in which the protrusions are provided; and
a non-installation region in which the protrusions are not provided and which is adjacent in the axial direction to the installation region;
wherein the installation region is provided on the closing part side, and
wherein the non-installation region is provided on the air chamber side.

3. The shock absorber according to claim 1, wherein an air chamber filled with gas is formed within the reservoir chamber,
wherein the outer case has a bottomed cylindrical shape in which one end is closed by a closing part,
wherein the reservoir chamber comprises:
an installation region in which the protrusions are provided; and
a non-installation region in which the protrusions are not provided and which is adjacent in the axial direction to the installation region;
wherein the installation region is provided on the air chamber side, and
wherein the non-installation region is provided on the closing part side.

4. The shock absorber according to claim 1, wherein an air chamber filled with gas is formed within the reservoir chamber,
wherein the outer case has a bottomed cylindrical shape in which one end is closed by a closing part,
wherein the reservoir chamber comprises:
an installation region in which the protrusions are provided; and
first and second non-installation regions in which the protrusions are not provided and which are adjacent in the axial direction to the installation region;
wherein the first non-installation region is provided on the closing part side, and
wherein the second non-installation region is provided on the air chamber side.

5. The shock absorber according to claim 1, wherein the protrusions are provided intermittently in the axial direction.

6. The shock absorber according to claim 2, wherein the protrusions are provided intermittently in the axial direction in the installation region.

7. The shock absorber according to claim 1, wherein an axial direction length in which the protrusions are provided is set to be shorter than an axial direction length of the reservoir chamber.

8. The shock absorber according to claim 1, wherein the protrusions are members made of resin that are formed integrally with the outer case.

9. The shock absorber according to claim 1, wherein a plurality of the protrusions are provided spaced apart by intervals in the circumferential direction.
